# EUROPÄISCHE PATENTSCHRIFT

(11) **EP 2 073 366 B1**
(45) Veröffentlichungstag und Bekanntmachung des Hinweises auf die Patenterteilung: **27.04.2016**
(21) Anmeldenummer: 07024504.8
(22) Anmeldetag: 18.12.2007
(51) Int. Cl.: H02M 3/335

(54) **Gleichstromsteller mit Resonanzwandler**
dc-dc converter with resonant converter
convertisseur continu/continu avec circuit resonant

(43) Veröffentlichungstag der Anmeldung: 24.06.2009
(73) Patentinhaber: ABB Research Ltd., 8050 Zürich (CH)
(72) Erfinder: Coccia, Antonio, 5400 Baden (CH); Canales, Francisco, 5405 Baden-Dättwil (CH); Knapp, Gerold, 5420 Ehrendingen (CH); Merk, Marcel, 8055 Zürich (CH); Da Silveira Cavalcante, Fabiana, 8708 Männedorf (CH)
(74) Vertreter: ABB Patent Attorneys

(56) Entgegenhaltungen:
- BO YANG ET AL: "LLC resonant converter for front end DC/DC conversion" APEC 2002. 17TH. ANNUAL IEEE APPLIED POWER ELECTRONICS CONFERENCE AND EXPOSITION. DALLAS, TX, MARCH 10 - 14, 2002; [ANNUAL APPLIED POWER ELECTRONICS CONFERENCE], NEW YORK, NY : IEEE, US, Bd. 2, 10. März 2002 (2002-03-10), Seiten 1108-1112, XP010583055 ISBN: 978-0-7803-7404-1

## Beschreibung

### Technisches Gebiet

Die Erfindung bezieht sich auf das Gebiet der Leistungselektronik. Sie geht aus von einer Stellerschaftung und einem System mit einer solchen Stellerschaltung gemäss dem Oberbegriff der unabhängigen Ansprüche.

### Stand der Technik

Heute werden in vielen Anwendungen vor allem in der Industrie und in Traktionsanwendungen, beispielsweise im Bahnbereich, Stellerschaltungen eingesetzt. Eine Stellerschaltung zur Umsetzung einer ersten Gleichspannung in eine zweite Gleichspannung ist beispielsweise in der DE 197 50 041 C1 angegeben. Darin umfasst die Stellerschaltung einen Hochsetzsteller und einen dem Hochsetzsteller ausgangsseitig nachgeschalteten Umrichter, insbesondere in Halbbrückenschaftung, wobei der Umrichter einen durch kapazitive Energiespeicher gebildeten Gleichspannungskreis aufweist und ausgangsseitig Ober eine Drossel mit der Sekundär seite eines Transformators verbunden ist. Weiterhin umfasst die Stellerschaltung einen Gleichrichter, welcher eingangsseitig mit der Sekundärwicklung des Transformators verbunden ist Der Hochsetzsteller und der Umrichter der DE 197 50 041 C1 wird derart angesteuert, dass die kapazitiven Energiespeicher, die Drossel und die Streuinduktivität des Transformators einen Resonanzschwingkreis bilden, d.h. der Hochsetzsteller legt ausgangsseitig an die kapazitiven Energiespeicher eine entsprechende Wechselspannung durch Takten der Gleichspannung an seinem Eingang an, so dass der Resonanzschwingkreis in Resonanz versetzt wird.

Problematisch bei einer vorstehend genannten Stellerschaltung ist, dass es trotz des vorstehend beschriebenen Resonanzschwingkreises nachwievor zu Schaltverlusten in den Leistungshalbleiterschaltern des Umrichters kommen kann, welche diese, insbesondere thermisch, stark belasten. Dadurch altem die Leistungshalbleiterschalter entsprechend schnell und die Ausfallraten der Leistungshalbleiterschalter steigen mit der Betriebsdauer der Stellerschaltung an. Eine hohe Verfügbarkeit der Stellerschaltung, wie sie beispielsweise bei Traktionsanwendungen unabdingbar ist, ist dann nicht mehr gegeben.

In der US 6,344,979 B1 ist ebenfalls eine Stellerschaltung beispielsweise in Fig. 4 angegeben, welche einen Resonanzumrichter, einen Transformator, einen Gleichrichter, welcher Gleichrichter eingangsseitig mit der Sekundärwicklung des Transformators verbunden ist, und eine mit dem Resonanzumrichter und mit der Primärwicklung des Transformators verbundene CLL-Resonanzschaltung umfasst, welche CLL-Resonanzschaltung eine Resonanzkapazität, eine erste und eine zweite Resonanzinduktivitat aufweist

### Darstellung der Erfindung

Aufgabe der Erfindung ist es deshalb, eine verbesserte Stellerschaltung anzugeben, welche geringe Schaltverluste aufweist und zudem eine alternative Lösung zum Stand der Technik, insbesondere zu der DE 197 50 041 C1 und zu der US 6,344,979 B1, darstellt. Eine weitere Aufgabe ist es, ein System mit Stellerschaltungen anzugeben, welches sich besonders einfach realisieren lässt. Diese Aufgaben werden durch die Merkmale des Anspruchs 1 bzw. des Anspruchs 6 gelöst. In den abhängigen Ansprüchen sind vorteilhafte Weiterbildungen der Erfindung angegeben.

Die erfindungsgemässe Stellerschaltung umfasst einen Hochsetzsetzsteller, einen Resonanzumrichter, einen Transformator, einen Gleichrichter, welcher Gleichrichter eingangsseitig mit der Sekundärwicklung des Transformators verbunden ist, und eine mit dem Resonanzumrichter und mit der Primärwicklung des Transformators verbundene CLL-Resonanzschaltung, welche CLL-Resonanzschaltung eine Resonanzkapazität, eine erste und eine zweite Resonanzinduktivität aufweist. Erfindungsgemäss ist die Resonanzkapazität seriell mit der ersten Resonanzinduktivität verbunden, wobei die erste Resonanzinduktivität mit einem ersten Verbindungspunkt der Primärwicklung des Transformators verbunden ist. Ferner ist die Resonanzkapazität mit dem Resonanzumrichter verbunden und die zweite Resonanzinduktivität ist mit dem Verbindungspunkt der Resonanzkapazität mit der ersten Resonanzinduktivität verbunden, wobei die zweite Resonanzinduktivität mit einem zweiten Verbindungspunkt der Primärwicklung des Transformators verbunden ist und der zweite Verbindungspunkt der Primärwicklung des Transformators mit dem Resonanzumrichter verbunden ist. Die CLL-Resonanzschaltung ist demnach als "T"-Schaltung ausgebildet.

Mittels der CLL-Resonanzschaltung, die durch den Resonanzumrichter derart angesteuert wird, dass sie mit ihrer Resonanzfrequenz schwingt, ist es neben dem stromlosen Ein- und Ausschalten der vorzugsweise verwendeten ansteuerbaren bidirektionalen Leistungshalbleiterschalter des Resonanzumrichters zudem möglich, die ansteuerbaren bidirektionalen Leistungshalbleiterschalter des Resonanzumrichters auch spannungslos ein- und auszuschalten. Dadurch können die Schaltverluste der ansteuerbaren bidirektionalen Leistungshalbleiter schalter des Resonanzumrichters weiter reduziert werden und eine veriustarme Umsetzung einer am Eingang des Hochsetzstellers anliegenden ersten Gleichspannung in eine am Ausgang des Gleichrichters anliegende zweite Gleichspannung ist vorteilhaft möglich. Durch die Verringerung der Schaltverluste verlängert sich die Lebensdauer der ansteuerbaren bidirektionalen Leistungshalbleiterschalter entsprechend und die Ausfallraten der Stellerschaltung können gering gehalten werden, so dass sich vorteilhaft eine hohe Verfügbarkeit der Stellerschaltung ergibt. Die Stellerschaltung stellt somit zudem eine alternative Lösung zum Stand der Technik dar.

Das erfindungsgemässe System weist mindestens zwei der vorstehend genanten erfindungsgemässen Stellerschaltungen auf, wobei die Hochsetzsetzsteller der Stellerschaltungen eingansseitig parallel oder seriell miteinander verbunden sind. Das System ist demnach denkbar einfach aufgebaut, wobei mittels der eingansseitigen Parallelschaltung der Hochsetzsteller vorteilhaft ein grosser Eingangsgleichstrom möglich ist und damit eine erhöhte elektrische Energie übertragen werden kann. Die eingansseitige Serienschaltung der Hochsetzsteller wiederum ermöglicht eine hohe Eingangsgleichspannung und damit ebenfalls die Übertragung grosser elektrischer Energie.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine erste Ausführungsform einer erfindungsgemässen Stellerschaltung,
- Fig. 2: eine zweite Ausführungsform einer erfindungsgemässen Stellerschaltung,
- Fig. 3: eine erste Ausführungsform eines erfindungsgemässen Systems mit Stellerschaltungen gemäss Fig. 1,
- Fig. 4: eine zweite Ausführungsform eines erfindungsgemässen Systems mit Stellerschaltungen gemäss Fig. 1,
- Fig. 5: eine dritte Ausführungsform eines erfindungsgemässen Systems mit Steller schaltungen gemäss Flg. 2 und
- Fig. 6: eine vierte Ausführungsform eines erfindungsgemässen Systems mit Steller schaltungen gemäss Fig. 2.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

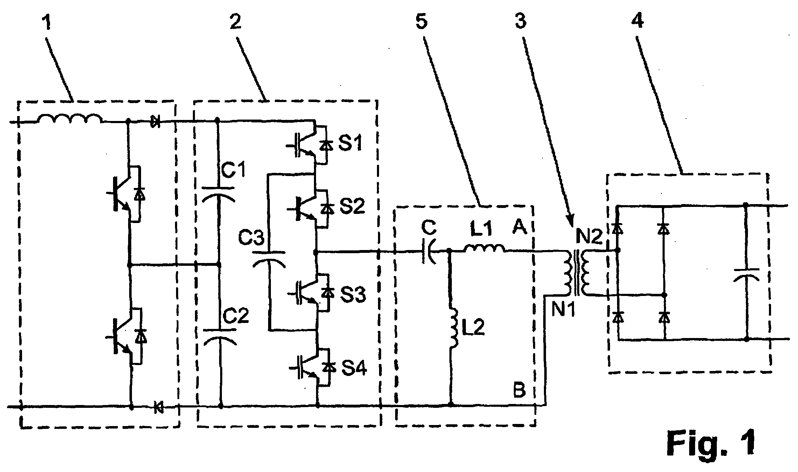

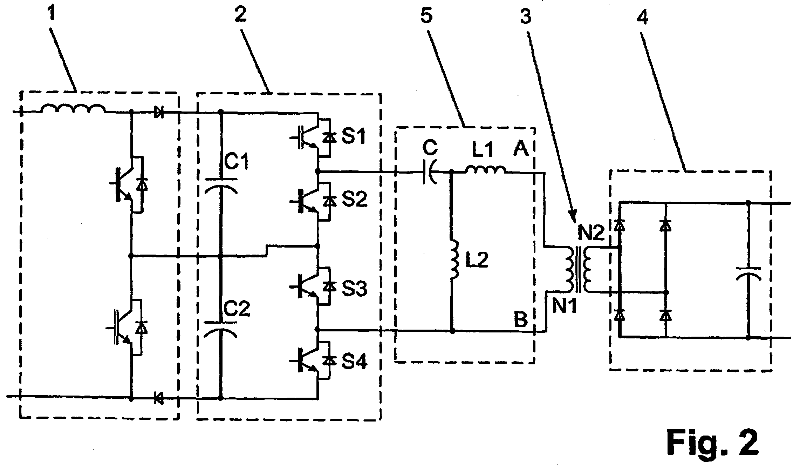

In Fig. 1 und Fig. 2 ist eine erste beziehungsweise eine zweite Ausführungsform einer erfindungsgemässen Stellerschaltung gezeigt. Darin umfasst die Stellerschaltung einen Hochsetzsetzsteller 1, einen dem Hochsetzsteller 1 ausgangsseitig nachgeschalteten Resonanzumrichter 2, einen Transformator 3 und einem Gleichrichter 4, welcher eingangsseitig mit der Sekundärwicklung N2 des Transformators 3 verbunden ist. Der Hochsetzsteller 1 kann wie in der Ausführungsform nach Fig. 1 aber auch in jeder denkbaren und dem Fachmann bekannten Ausführungsform ausgebildet sein. Der Gleichrichter 4 kann wie in der Ausführungsform nach Fig. 1 aber auch in jeder anderen denkbaren und dem Fachmann bekannten Ausführungsform ausgebildet, sein. Ferner umfasst die Stellerschaltung eine mit dem Resonanzumrichter 2 und mit der Primärwicklung N1 des Transformators 3 verbundenen CLL-Resonanzschaltung 5, welche CLL-Resonanzschaltung 5 eine Resonanzkapazität C, eine erste und eine zweite Resonanzinduktivität L1, L2 aufweist.

Erfindungsgemäss ist nun die Resonanzkapazität C seriell mit der ersten Resonanzinduktivität L1 verbunden, wobei die erste Resonanzinduktivität L1 mit einem ersten Verbindungspunkt A der Primärwicklung N1 des Transformators 3 verbunden ist und die Resonanzkapazität C mit dem Resonanzumrichter 2 verbunden ist. Die zweite Resonanzinduktivität L2 ist mit dem Verbindungspunkt der Resonanzkapazität C mit der ersten Resonanzinduktivitat L1 verbunden, wobei die zweite Resonanzinduktivität L2 mit einem zweiten Verbindungspunkt B der Primärwicklung N1 des Transformators 3 verbunden ist und der zweite Verbindungspunkt B der Primärwicklung N1 des Transformators 3 mit dem Resonanzumrichter 2 verbunden ist. Die CLL-Resonanzschaltung 5 wird durch den Resonanzumrichter 2 vorzugsweise derart angesteuert, dass die CLL-Resonanzschaltung 5 mit ihrer Resonanzfrequenz schwingt. Dadurch ist es neben dem stromlosen Ein- und Ausschalten der vorzugsweise verwendeten ansteuerbaren bidirektionalen Leistungshalbleiterschalter des Resonanzumrichters 2 zudem möglich, die ansteuerbaren bidirektionalen Leistungshalbleiterschalter des Resonanzumrichters 2 auch spannungslos ein- und auszuschalten. Die Schaltverluste der ansteuerbaren bidirektionalen Leistungshalbleiterschalter des Resonanzumrichters 2 können damit weiter reduziert werden und eine verlustarme Umsetzung einer am Eingang des Hochsetzstellers 1 anliegenden ersten Gleichspannung in eine am Ausgang des Gleichrichters 4 anliegende zweite Gleichspannung ist vorteilhaft möglich. Durch die Verringerung der Schaltverluste verlängert sich die Lebensdauer der ansteuerbaren bidirektionalen Leistungshalbleiterschalter entsprechend und die Ausfallraten der Stellerschaltung können gering gehalten werden, so dass sich vorteilhaft eine hohe Verfügbarkeit der Stellerschaltung ergibt. Es hat sich als besonders vorteilhaft erwiesen, wenn die ansteuerbaren bidirektionalen Leistungshalbleiterschafter des Resonanzumrichters 2 im Betreib mit einer Schaltfrequenz schalten, die der Resonanzfrequenz der CLL-Resonanzschaltung 5 entspricht, da dann beim stromlosen Ein- und Ausschalten der ansteuerbaren bidirektionalen Leistungshalbleiterschalter und beim spannungslosen Ein- und Ausschalten der ansteuerbaren bidirektionalen Leistungshalbleiterschalter besonders geringe Schaltverluste auftreten. Ist die Schaltfrequenz der ansteuerbaren bidirektionalen Leistungshalbleiterschalter höher als die Resonanzfrequenz, so können die durch die Schaltvorgänge der ansteuerbaren bidirektionalen Leistungshalbleiterschalter generierten Schwingungen sowohl an der Eingangsseite der Stellerschaltung, d.h. am Eingang des Hochsetzstellers 1, als auch an der Ausgangsseite der Stellerschaltung, d.h. am Ausgang des Gleichrichters 4, in erwünschtem Masse gering gehalten werden, wobei die Schaltverluste der ansteuerbaren bidirektionalen Leistungshalbleiterschalter dabei nachwievor gering sind.

Gemäss Fig. 1 weist der Resonanzumrichter 2 einen ersten kapazitiven Energiespeicher C1, einen zu dem ersten kapazitiven Energiespeicher C1 seriell geschalteten zweiten kapazitiven Energiespeicher C2, einen dritten kapazitiven Energiespeicher C3 und einen ersten, einen zweiten, einen dritten und einen vierten ansteuerbaren bidirektionalen Lelstungshalbleiter schalter S1, S2, S3, S4 auf, wobei die ansteuerbaren bidirektionalen Leistungshalbleiterschalter S1, S2, S3, S4 seriell geschaltet sind. Der erste kapazitive Energiespeicher C1 ist mit dem ersten ansteuerbaren bidirektionalen Leistungshalbleiterschalter S1 verbunden und der zweite kapazitive Energiespeicher C2 ist mit dem vierten ansteuerbaren bidirektionalen Leistungshalbleiterschalter S4 verbunden. Zudem ist der dritte kapazitive Energiespeicher C3 mit dem Verbindungspunkt des ersten mit dem zweiten ansteuerbaren bidirektionalen Leistungshalbleiterschalter S1, S2 und mit dem Verbindungspunkt des dritten mit dem vierten ansteuerbaren bidirektionalen Leistungshalbleiterschalter S3, S4 verbunden. Weiterhin ist die Resonanzkapazität C mit dem Verbindungspunkt des zweiten mit dem dritten ansteuerbaren bidirektionalen Leistungshalbleiterschalter S2, S3 verbunden und der zweite Verbindungspunkt B der Primärwicklung N1 des Transformators 3 ist mit dem Verbindungspunkt des zweiten kapazitiven Energiespeichers C2 mit dem vierten ansteuerbaren bidirektionalen Leistungshalbleiterschalter S4 verbunden. Der dritte kapazitive Energiespeicher C3 bewirkt mit Vorteil eine Stabilisierung der Spannung an den ansteuerbaren bidirektionalen Leistungshalbleiterschalter S1, S2, S3, S4, welche insbesondere der Hälfte der über dem ersten und zweiten kapazitiven Energiespeicher C1, C2 anliegenden Spannung entspricht.

Verfahrensmässig wird bei der Stellerschaltung gemäss Fig. 1 der erste, zweite, dritte vierte ansteuerbare bidirektionale Leistungshalbleiterschalter S1, S2, S3, S4 jeweils mittels eines Ansteuersignals angesteuert, wobei das Ansteuersignal nach Art einer Pulsweitenmodulation erzeugt wird. Die Schaltfrequenz der ansteuerbaren bidirektionalen Leistungshalbleiterschalter S1, S2, S3, S4 wird durch das Ansteuersignal bestimmt. Um die vorstehend bereits genannten Vorteile zu erreichen, ist das Ansteuersignal für den ersten ansteuerbaren bidirektionalen Leistungshalbleiterschalter S1 in Phase bezüglich des Trägersignals der Pulsweitenmodulation. Im Gegensatz dazu ist das Ansteuersignal für den zweiten ansteuerbaren bidirektionalen Leistungshalbleiterschalter S2 gegenphasig bezüglich des Trägersignals der Pulsweitenmodulation. Besonders vorteilhaft wird der Aussteuergrad des Ansteuersignals des ersten ansteuerbaren bidirektionalen Leistungshalbleiterschalters S1 und der Aussteuergrad des Ansteuersignals des zweiten ansteuerbaren bidirektionalen Leistungshalbleiterschalters S2 jeweils in der Grössenordnung 25% oder 75% gewählt. Als Ansteuersignal für den dritten ansteuerbaren bidirektionalen Leistungshalbfeiterschafter S3 wird dann das komplementäre Ansteuersignal für den zweiten ansteuerbaren bidirektionalen Leistungshalbleiterschalter S2 gewählt und als Ansteuersignal für den vierten ansteuerbaren bidirektionalen Leistungshalbleiterschalter S4 wird das komplementäre Ansteuersignal für den zweiten ansteuerbaren bidirektionalen Leistungshalbleiterschalter S2 gewählt.

Gemäss Fig. 2 weist der Resonanzumrichter 2 einen ersten kapazitiven Energiespeicher C1, einen zu dem ersten kapazitiven Energiespeicher C1 seriell geschalteten zweiten kapazitiven Energiespeicher C2 und einen ersten, einen zweiten, einen dritten und einen vierten ansteuerbaren bidirektionalen Leistungshalbleiterschalter S1, S2, S3, S4 auf, wobei die ansteuerbaren bidirektionalen Leistungshalbleiterschalter S1, S2, S3, S4 seriell geschaltet sind. Der erste kapazitive Energiespeicher C1 ist mit dem ersten ansteuerbaren bidirektionalen Leistungshalbleiterschalter S1 verbunden, der Verbindungspunkt des ersten mit dem zweiten kapazitiven Energiespeicher C1, C2 ist mit dem Verbindungspunkt des zweiten mit dem dritten ansteuerbaren bidirektionalen Leistungshalbleiterschalter S2, S3 verbunden und der zweite kapazitive Energiespeicher C2 ist mit dem vierten ansteuerbaren bidirektionalen Leistungshalbleiterschalter S4 verbunden. Ferner ist die Resonanzkapazität C mit dem Verbindungspunkt des ersten mit dem zweiten ansteuerbaren bidirektionalen Leistungshalbleiterschalter S1, S2 verbunden und der zweite Verbindungspunkt B der Primärwicklung (N1) des Transformators 3 ist mit dem Verbindungspunkt des dritten mit dem vierten ansteuerbaren bidirektionalen Leistungshalbleiterschalter S3, S4 verbunden ist.

Verfahrensmässig wird bei der Stellerschaltung gemäss Fig. 2 der erste, zweite, dritte vierte ansteuerbare bidirektionale Leistungshalbleiterschalter S1, S2, S3, S4 jeweils mittels eines Ansteuersignals angesteuert, wobei das Ansteuersignal nach Art einer Pulsweitenmodulation erzeugt wird. Um die vorstehend bereits genannten Vorteile zu erreichen, ist das Ansteuersignal für den ersten ansteuerbaren bidirektionalen Leistungshalbleiterschalter S1 in Phase bezüglich des Trägersignals der Pulsweitenmodulation. Im Gegensatz dazu ist das Ansteuersignal für den vierten ansteuerbaren bidirektionalen Leistungshalbleiterschalter S4 gegenphasig bezüglich des Trägersignals der Pulsweitenmodulation. Besonders vorteilhaft wird der Aussteuergrad des Ansteuersignals des ersten ansteuerbaren bidirektionalen Leistungshalbleiterschälters S1 und der Aussteuergrad des Ansteuersignals des vierten ansteuerbaren bidirektionalen Leistungshalbleiterschalters S4 jeweils in der Grössenordnung 25% oder 75% gewählt. Als Ansteuersignal für den zweiten ansteuerbaren bidirektionalen Leistungshalbleiterschalter S2 wird dann das komplementäre Ansteuersignal für den ersten ansteuerbaren bidirektionalen Leistungshalbleiterschalter S1 gewählt und als Ansteuersignal für den dritten ansteuerbaren bidirektionalen Leistungshalbleiterschalter S3 wird das komplementäre Ansteuersignal für den vierten ansteuerbaren bidirektionalen Leistungshalbleiterschalter S4 gewählt.

Denkbar ist es, dass allgemein die zweite Resonanzinduktivität L2 im Transformator 3 integriert ist. Denkbar ist aber auch, dass allgemein die erste Resonanzinduktivität L1 entweder zusätzlich oder alleine im Transformator 3 integriert ist. Durch diese Massnahmen kann Platz eingespart werden und Fertigung der Stellerschaltung, insbesondere die Montage, vereinfacht sich.

Vorzugsweise ist der erste, zweite, dritte und vierte ansteuerbare bidirektionale Leistungshalbleiterschalter S1, S2, S3, S4 jeweils als ein integrierter über die Ansteuerelektrode kommutierter Thyristor (IGCT - Integrated Gate-Commutated Thyristor) mit einer zugehörigen parallel geschalteten Diode. Ein solcher Thyristor weist besonders geringe Wirkleistungsverluste bei gleichzeitig hoher Robusthelt, vor allem bei hohen Spannungen und insbesondere bei Überspannungen, auf. Es ist aber auch denkbar, wie in den Ausführungsformen nach Fig. 1 bis Fig. 6 gezeigt, den ersten, zweiten, dritten und vierten ansteuerbaren bidirektionalen Leistungshalbleiterschalter S1, S2, S3, S4 jeweils als einen Bipolartransistor mit isoliert angeordneter Ansteuerelektrode (IGBT - Insulated Gate Bipolartransistor) mit einer zugehörigen parallel geschalteten Diode auszubilden. Ein solcher Transistor zeichnet sich durch eine hohe Schaltfrequenz und damit durch geringe Schwingungen im Strom und in der Spannung aus.

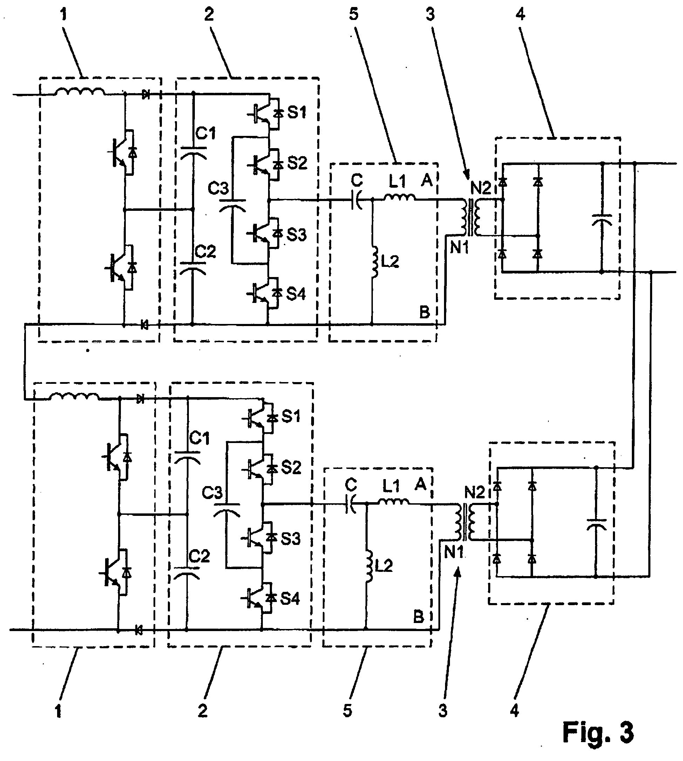

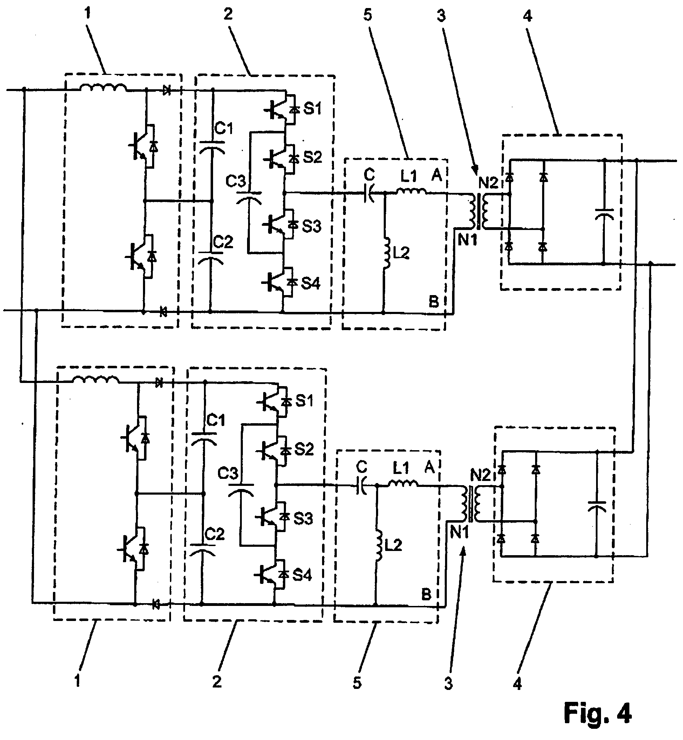

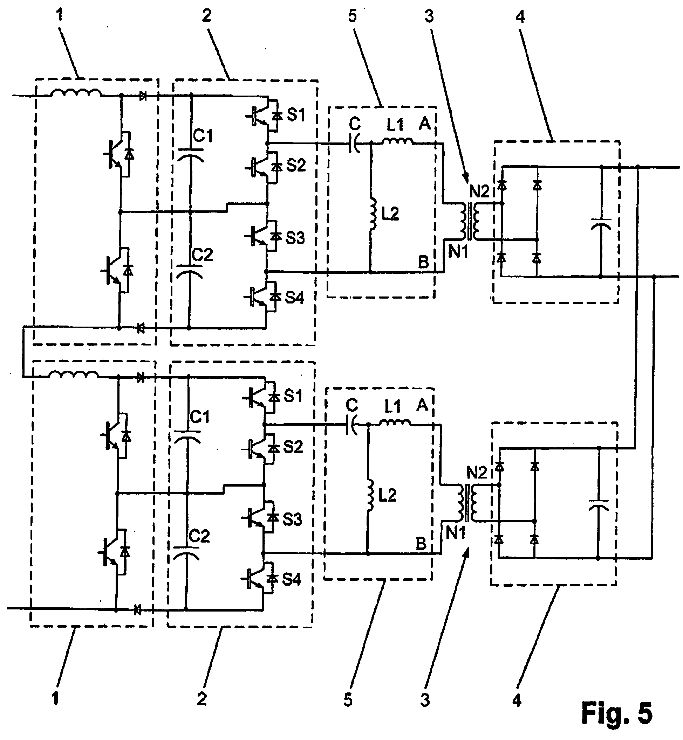

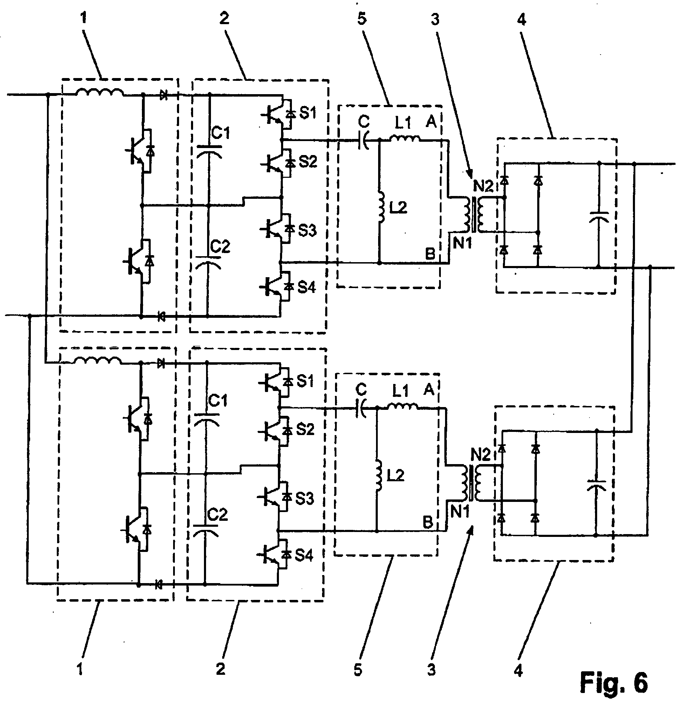

Das erfindungsgemässe System weist allgemein mindestens zwei der vorstehend genanten efindungsgemässen Stellerschaltungen auf, wobei die Hochsetzsetzsteller 1 der Stelierschaltungen eingansseitig parallel oder seriell miteinander verbunden sind. Das System ist damit denkbar einfach aufgebaut, wobei mittels der eingansseitigen Parallelschaltung der Hochsetzsteller 1 vorteilhaft ein grosser Eingangsgleichstrom möglich ist und somit eine erhöhte elektrische Energie übertragen werden kann. Die eingansseitige Serienschaltung der Hochsetzsteller 1 wiederum ermöglicht eine hohe Eingangsgleichspannung und damit ebenfalls die Übertragung grosser elektrischer Energie. Weiterhin ist es bei dem erfindungsgemässen System allgemein möglich, dass die Gleichrichter 4 der Stellerschaltungen ausgangsseitig parallel oder seriell miteinander verbunden sind. Mittels der ausgangsseitigen Parallelschaltung der Gleichrichter 4 ist vorteilhaft ein grosser Ausgangsgleichstrom möglich. Die ausgangsseitige Serienschaltung der Gleichrichter 4 wiederum ermöglicht eine hohe Ausgangsgleichspannung. Fig. 3 zeigt beispielhaft eine erste Ausführungsform des erfindungsgemässen Systems mit zwei Stellerschaltungen gemäss Fig. 1, wobei die Hochsetzsteller 1 eingangsseitig seriell und die Gleichrichter 4 ausgangsseitig parallel geschaltet sind. Fig. 4 zeigt beispielhaft eine zweite Ausführungsform des erfindungsgemässen Systems mit zwei Stellerschaltungen gemäss Fig. 1, wobei die Hochsetzsteller 1 eingangsseitig parallel und die Gleichrichter 4 ausgangsseitig parallel geschaltet sind. Fig. 5 zeigt eine dritte Ausführungsform des erfindungsgemässen Systems mit zwei Stellerschaltungen gemäss Flg. 2, wobei die Hochsetzsteller 1 eingangsseitig seriell und die Gleichrichter 4 ausgangsseitig parallel geschaltet sind. Fig. 6 zeigt eine vierte Ausführungsform des erfindungsgemässen Systems mit zwei Stellerschaltungen gemäss Fig. 3, wobei die Hochsetzsteller 1 eingangsseitig parallel und die Gleichrichter 4 ausgangsseitig parallel geschaltet sind.

### Bezugszeichenliste

- 1: Hochsetzsetzsteller
- 2: Resonanzumrichter
- 3: Transformator
- 4: Gleichrichter
- 5: CLL-Resonanzschaltung

## Patentansprüche

1. Stellerschaltung mit einem Hochsetzsetzsteller (1), mit einem dem Hochsetzsteller (2) ausgangsseitig nachgeschalteten Resonanzumrichter (2), mit einem Transformator (3), mit einem Gleichrichter (4), welcher Gleichrichter (4) eingangsseitig mit der Sekundärwicklung (N2) des Transformators (3) verbunden ist, und mit einer mit dem Resonanzumrichter (2) und mit der Primärwicklung (N1) des Transformators (3) verbundenen CLL-Resonanzschaltung (5), welche CLL-Resonanzschaltung (5) eine Resonanzkapazität (C), eine erste und eine zweite Resonanzinduktivität (L1, L2) aufweist,
**dadurch gekennzeichnet,**
**dass** die Resonanzkapazität (C) seriell mit der ersten Resonanzinduktivität (L1) verbunden ist, wobei die erste Resonanzinduktivität (L1) mit einem ersten Verbindungspunkt (A) der Primärwicklung (N1) des Transformators (3) verbunden ist und die Resonanzkapazität (C) mit dem Resonanzumrichter (2) verbunden ist, und
**dass** die zweite Resonanzinduktivität (L2) mit dem Verbindungspunkt der Resonanzkapazität (C) mit der ersten Resonanzinduktivität (L1) verbunden ist, wobei die zweite Resonanzinduktivität (L2) mit einem zweiten Verbindungspunkt (B) der Primärwicklung (N1) des Transformators (3) verbunden ist und der zweite Verbindungspunkt (B) der Primärwicklung (N1) des Transformators (3) mit dem Resonanzumrichter (2) verbunden ist.

2. Stellerschaltung nach Anspruch 1, **dadurch gekennzeichnet, dass** der Resonanzumrichter (2) einen ersten kapazitiven Energiespeicher (C1), einen zu dem ersten kapazitiven Energiespeicher (C1) seriell geschalteten zweiten kapazitiven Energiespeicher (C2), einen dritten kapazitiven Energiespeicher (C3) und einen ersten, einen zweiten, einen dritten und einen vierten ansteuerbaren bidirektionalen Leistungshalbleiterschalter (S1, S2, S3, S4) aufweist, wobei die ansteuerbaren bidirektionalen Leistungshalbleiterschalter (S1, S2, S3, S4) seriell geschaltet sind,
dass der erste kapazitive Energiespeicher (C1) mit dem ersten ansteuerbaren bidirektionalen Leistungshalbleiterschalter (S1) verbunden ist und der zweite kapazitive Energiespeicher (C2) mit dem vierten ansteuerbaren bidirektionalen Leistungshalbleiterschalter (S4) verbunden ist,
dass der dritte kapazitive Energiespeicher (C3) mit dem Verbindungspunkt des ersten mit dem zweiten ansteuerbaren bidirektionalen Leistungshalbleiterschälter (S1, S2) und
mit dem Verbindungspunkt des dritten mit dem vierten ansteuerbaren bidirektionalen Leistungshalbleiterschalter (S3, S4) verbunden ist, und
dass die Resonanzkapazität (C) mit dem Verbindungspunkt des zweiten mit dem dritten ansteuerbaren bidirektionalen Leistungshalbleiterschalter (S2, S3) verbunden ist und der zweite Verbindungspunkt (B) der Primärwicklung (N1) des Transformators (3) mit dem Verbindungspunkt des zweiten kapazitiven Energiespeichers (C2) mit dem vierten ansteuerbaren bidirektionalen Leistungshalbleiterschalter (S4) verbunden ist.

3. Stellerschaltung nach Anspruch 1, **dadurch gekennzeichnet, dass** der Resonanzumrichter (2) einen ersten kapazitiven Energiespeicher (C1), einen zu dem ersten kapazitiven Energiespeicher (C1) seriell geschalteten zweiten kapazitiven Energiespeicher (C2) und einen ersten, einen zweiten, einen dritten und einen vierten ansteuerbaren bidirektionalen Leistungshalbleiterschalter (S1, S2, S3, S4) aufweist, wobei die ansteuerbaren bidirektionalen Leistungshalbleiterschalter (S1, S2, S3, S4) seriell geschaltet sind,
dass der erste kapazitive Energiespeicher (C1) mit dem ersten ansteuerbaren bidirektionalen Leistungshalbleiterschafter (S1) verbunden ist, der Verbindungspunkt des ersten mit dem zweiten kapazitiven Energiespeicher (C1, C2) mit dem Verbindungspunkt des zweiten mit dem dritten ansteuerbaren bidirektionalen Leistungshalbleiterschalter (S2, S3) verbunden ist und der zweite kapazitive Energiespeicher (C2) mit dem vierten ansteuerbaren bidirektionalen Leistungshalbleiterschalter (S4) verbunden ist, und
dass die Resonanzkapazität (C) mit dem Verbindungspunkt des ersten mit dem zweiten ansteuerbaren bidirektionalen Leistungshalbleiterschalter (S1, S2) verbunden ist und der zweite Verbindungspunkt (B) der Primärwicklung (N1) des Transformators (3) mit dem Verbindungspunkt des dritten mit dem vierten ansteuerbaren bidirektionalen Leistungshalbleiterschalter (S3, S4) verbunden ist.

4. Stellerschaltung nach einem der Ansprüche 1 bis 3, **dadurch gekennzeichnet, dass** die zweite Resonanzinduktivität (L2) im Transformator (3) integriert ist.

5. Stellerschaltung nach einem der Ansprüche 1 bis 4, **dadurch gekennzeichnet, dass** die erste Resonanzinduktivität (L1) im Transformator (3) integriert ist.

6. System, **dadurch gekennzeichnet, dass** mindestens zwei Stellerschaltungen nach einem der Ansprüche 1 bis 5 vorgesehen sind,
dass die Hochsetzsetzsteller (1) der Stellerschaltungen eingansseitig parallel oder seriell miteinander verbunden sind.

7. System nach Anspruch 6, **dadurch gekennzeichnet, dass** die Gleichrichter (4) der Stellerschaltungen ausgangsseitig parallel oder seriell miteinander verbunden sind.

8. Verfahren zum Betrieb der Stellerschaltung nach Anspruch 2, bei welchen der erste, zweite, dritte vierte ansteuerbare bidirektionale Leistungshalbleiterschafter (S1, S2, S3, S4) jeweils mittels eines Ansteuersignals angesteuert wird, wobei das Ansteuersignal nach Art einer Pulsweitenmodulation erzeugt wird, **dadurch gekennzeichnet,**
**dass** das Ansteuersignal für den ersten ansteuerbaren bidirektionalen Leistungshalbleiterschalter (S1) in Phase bezüglich des Trägersignals der Pulsweitenmodulation ist, dass das Ansteuersignal für den zweiten ansteuerbaren bidirektionalen Leistungshalbleiterschalter (S2) gegenphasig bezüglich des Trägersignals der Pulsweitenmodulation ist, dass der Aussteuergrad des Ansteuersignals des ersten ansteuerbaren bidirektionalen Leistungshalbleiterschalters (S1) und der Aussteuergrad des Ansteuersignals des zweiten ansteuerbaren bidirektionalen Leistungshalbleiterschalters (S2) jeweils in der Grössenordnung 25% oder 75% gewählt wird,
**dass** als Ansteuersignal für den dritten ansteuerbaren bidirektionalen Leistungshalbleiterschalter (S3) das komplementäre Ansteuersignal für den zweiten ansteuerbaren bidirektionalen Leistungshalbleiterschalter (S2) gewählt wird, und
**dass** als Ansteuersignal für den vierten ansteuerbaren bidirektionalen Leistungshalbleiterschalter (S4) das komplementäre Ansteuersignal für den zweiten ansteuerbaren bidirektionalen Leistungshalbleiterschalter (S2) gewählt wird.

9. Verfahren zum Betrieb der Stellerschaltung nach Anspruch 3, bei welchem der erste, zweite, dritte vierte ansteuerbare bidirektionale Leistungshalbleiterschalter (S1, S2, S3, S4) jeweils mittels eines Ansteuersignals angesteuert wird, wobei das Ansteuersignal nach Art einer Pulsweitenmodulation erzeugt wird, **dadurch gekennzeichnet,**
**dass** das Ansteuersignal für den ersten ansteuerbaren bidirektionalen Leistungshalbleiterschalter (S1) in Phase bezüglich des Trägersignals der Pulsweitenmodulation ist, dass das Ansteuersignal für den vierten ansteuerbaren bidirektionalen Leistungshalbeiterschalter (S4) gegenphasig bezüglich des Trägersignals der Pulsweitenmodulation ist, dass der Aussteuergrad des Ansteuersignals des ersten ansteuerbaren bidirektionalen Leistungshalbleiterschalters (S1) und der Aussteuergrad des Ansteuersignals des vierten ansteuerbaren bidirektionalen Leistungshalbleiterschalters (S4) jeweils in der Grössenordnung 25% oder 75% gewählt wird,
**dass** als Ansteuersignal für den zweiten ansteuerbaren bidirektionalen Leistungshalbleiterschalter (S2) das komplementäre Ansteuersignal für den ersten ansteuerbaren bidirektionalen Leistungshalbleiterschalter (S1) gewählt wird, und
**dass** als Ansteuersignal für den dritten ansteuerbaren bidirektionalen Leistungshalbleiterschalter (S3) das komplementäre Ansteuersignal für den vierten ansteuerbaren bidirektionalen Leistungshalbleiterschalter (S4) gewählt wird.

## Claims

1. Controller circuit having a step-up controller (1), having a resonant converter (2) which is connected downstream from the step-up controller (2) on the output side, having a transformer (3), having a rectifier (4), which rectifier (4) is connected on the input side to the secondary winding (N2) of the transformer (3), and having a CLL resonant circuit (5) which is connected to the resonant converter (2) and to the primary winding (N1) of the transformer (3) and has a resonant capacitance (C), and a first and a second resonant inductance (L1, L2),
**characterized**
**in that** the resonant capacitance (C) is connected in series with the first resonant inductance (L1), with the first resonant inductance (L1) being connected to a first junction point (A) of the primary winding (N1) of the transformer (3), and with the resonant capacitance (C) being connected to the resonant converter (2), and in that the second resonant inductance (L2) is connected to the junction point of the resonant capacitance (C) and the first resonant inductance (L1), with the second resonant inductance (L2) being connected to a second junction point (B) of the primary winding (N1) of the transformer (3), and with the second junction point (B) of the primary winding (N1) of the transformer (3) being connected to the resonant converter (2).

2. Controller circuit according to Claim 1, **characterized**
**in that** the resonant converter (2) has a first capacitive energy store (C1), a second capacitive energy store (C2) which is connected in series with the first capacitive energy store (C1), a third capacitive energy store (C3) and a first, a second, a third and a fourth controllable bidirectional power semiconductor switch (S1, S2, S3, S4), with the controllable bidirectional power semiconductor switches (S1, S2, S3, S4) being connected in series,
**in that** the first capacitive energy store (C1) is connected to the first controllable bidirectional power semiconductor switch (S1) and the second capacitive energy store (C2) is connected to the fourth controllable bidirectional power semiconductor switch (S4),
**in that** the third capacitive energy store (C3) is connected to the junction point of the first and the second controllable bidirectional power semiconductor switches (S1, S2), and to the junction point of the third and the fourth controllable bidirectional power semiconductor switches (S3, S4), and
**in that** the resonant capacitance (C) is connected to the junction point of the second and the third controllable bidirectional power semiconductor switches (S2, S3) and the second junction point (B) of the primary winding (N1) of the transformer (3) is connected to the junction point of the second capacitive energy store (C2) and the fourth controllable bidirectional power semiconductor switch (S4).

3. Controller circuit according to Claim 1, **characterized in that** the resonant converter (2) has a first capacitive energy store (C1), a second capacitive energy store (C2) which is connected in series with the first capacitive energy store (C1), and a first, a second, a third and a fourth controllable bidirectional power semiconductor switch (S1, S2, S3, S4), with the controllable bidirectional power semiconductor switches (S1, S2, S3, S4) being connected in series, **in that** the first capacitive energy store (C1) is connected to the first controllable bidirectional power semiconductor switch (S1), the junction point of the first and the second capacitive energy store (C1, C2) is connected to the junction point of the second and the third controllable bidirectional power semiconductor switches (S2, S3), and the second capacitive energy store (C2) is connected to the fourth controllable bidirectional power semiconductor switch (S4), and
**in that** the resonant capacitance (C) is connected to the junction point of the first and the second controllable bidirectional power semiconductor switches (S1, S2), and the second junction point (B) of the primary winding (N1) of the transformer (3) is connected to the junction point of the third and the fourth controllable bidirectional power semiconductor switches (S3, S4).

4. Controller circuit according to one of Claims 1 to 3, **characterized in that** the second resonant inductance (L2) is integrated in the transformer (3).

5. Controller circuit according to one of Claims 1 to 4, **characterized in that** the first resonant inductance (L1) is integrated in the transformer (3).

6. System, **characterized in that** at least two controller circuits according to one of Claims 1 to 5 are provided,
**in that** the step-up controllers (1) in the controller circuits are connected in parallel or in series with one another on the input side.

7. System according to Claim 6, **characterized in that** the rectifiers (4) in the controller circuits are connected in parallel or in series with one another on the output side.

8. Method for operation of the controller circuit according to Claim 2, in which the first, the second, the third and the fourth controllable bidirectional power semiconductor switches (S1, S2, S3, S4) are each controlled by means of a control signal, with the control signal being produced in the form of pulse-width modulation, **characterized**
**in that** the control signal for the first controllable bidirectional power semiconductor switch (S1) is in phase with the carrier signal of the pulse-width modulation,
**in that** the control signal for the second controllable bidirectional power semiconductor switch (S2) is in antiphase to the carrier signal of the pulse-width modulation,
**in that** the drive level of the control signal of the first controllable bidirectional power semiconductor switch (S1) and the drive level of the control signal of the second controllable bidirectional power semi-conductor switch (S2) are each chosen to be in the order of magnitude of 25% or 75%,
**in that** the complementary control signal for the second controllable bidirectional power semiconductor switch (S2) is chosen as the control signal for the third controllable bidirectional power semiconductor switch (S3), and
**in that** the complementary control signal for the second controllable bidirectional power semiconductor switch (S2) is chosen as the control signal for the fourth controllable bidirectional power semiconductor switch (S4).

9. Method for operation of the controller circuit according to Claim 3, in which the first, the second, the third and the fourth controllable bidirectional power semiconductor switches (S1, S2, S3, S4) are each controlled by means of a control signal, with the control signal being produced in the form of pulse-width modulation, **characterized**
**in that** the control signal for the first controllable bidirectional power semiconductor switch (S1) is in phase with the carrier signal of the pulse-width modulation,
**in that** the control signal for the fourth controllable bidirectional power semiconductor switch (S4) is in antiphase to the carrier signal of the pulse-width modulation,
**in that** the drive level of the control signal of the first controllable bidirectional power semiconductor switch (S1) and the drive level of the control signal for the fourth controllable bidirectional power semi-conductor switch (S4) are each chosen to be in the order of magnitude of 25% or 75%,
**in that** the complementary control signal for the first controllable bidirectional power semiconductor switch (S1) is chosen as the control signal for the second controllable bidirectional power semiconductor switch (S2), and
**in that** the complementary control signal for the fourth controllable bidirectional power semiconductor switch (S4) is chosen as the control signal for the third controllable bidirectional power semiconductor switch (S3).

## Revendications

1. Convertisseur continu-continu comportant un convertisseur élévateur (1) ayant un convertisseur résonnant (2) connecté, côté sortie, en aval du convertisseur élévateur (2), un transformateur (3), un redresseur (4), lequel redresseur (4) est connecté, côté entrée, à l'enroulement secondaire (N2) du transformateur (3), et un circuit résonant CLL (5) connecté au convertisseur résonnant (2) et à l'enroulement primaire (N1) du transformateur (3), lequel circuit résonant CLL (5) comprend une capacité de résonance (C), et des premières et deuxième inductances de résonance (L1, L2),
**caractérisé en ce que** la capacité de résonance (C) est connectée en série à la première inductance de résonance (L1), dans lequel la première inductance de résonance (L1) est connectée à un premier point de connexion (A) de l'enroulement primaire (N1) du transformateur (3) et la capacité de résonance (C) est connectée au convertisseur résonnant (2), et
**en ce que** la deuxième inductance de résonance (L2) est connectée au point de connexion de la capacité de résonance (C) à la première inductance de résonance (L1), dans lequel la deuxième inductance de résonance (L2) est connectée à un deuxième point de connexion (B) de l'enroulement primaire (N1) du transformateur (3) et le deuxième point de connexion (B) de l'enroulement primaire (N1) du transformateur (3) est connecté au convertisseur résonnant (2).

2. Convertisseur continu-continu selon la revendication 1, **caractérisé en ce que** le convertisseur résonant (2) comprend un premier accumulateur d'énergie capacitif (C1), un deuxième accumulateur d'énergie capacitif (C2) connecté en série au premier accumulateur d'énergie capacitif (C1), un troisième accumulateur d'énergie capacitif (C3) et des premier, deuxième, troisième et quatrième commutateurs à semi-conducteur de puissance bidirectionnels (S1, S2, S3, S4) commandables, dans lequel les commutateurs à semi-conducteur de puissance bidirectionnels (S1, S2, S3, S4) commandables sont connectés en série,
**en ce que** le premier accumulateur d'énergie capacitif (C1) est connecté au premier commutateur à semi-conducteur de puissance bidirectionnel (S1) commandable et le deuxième accumulateur d'énergie capacitif (C2) est connecté au quatrième commutateur à semi-conducteur de puissance bidirectionnel (S4) commandable,
**en ce que** le troisième accumulateur d'énergie capacitif (C3) est connecté au point de connexion des premier et deuxième commutateurs à semi-conducteur de puissance bidirectionnels (S1, S2) commandables et au point de connexion des troisième et quatrième commutateurs à semi-conducteur de puissance bidirectionnels (S3, S4) commandables, et
**en ce que** la capacité de résonance (C) est connectée au point de connexion des deuxième et troisième commutateurs à semi-conducteur de puissance bidirectionnels (S2, S3) commandables et le deuxième point de connexion (B) de l'enroulement primaire (N1) du transformateur (3) est connecté au point de connexion du deuxième accumulateur d'énergie capacitif (C2) au quatrième commutateur à semi-conducteur de puissance bidirectionnel (S4) commandable.

3. Convertisseur continu-continu selon la revendication 1, **caractérisé en ce que** le convertisseur résonant (2) comprend un premier accumulateur d'énergie capacitif (C1), un deuxième accumulateur d'énergie capacitif (C2) connecté en série au premier accumulateur d'énergie capacitif (C1) et des premier, deuxième, troisième et quatrième commutateurs à semi-conducteur de puissance bidirectionnels (S1, S2, S3, S4) commandables, dans lequel les commutateurs à semi-conducteur de puissance bidirectionnels (S1, S2, S3, S4) commandables sont connectés en série,
**en ce que** le premier accumulateur d'énergie capacitif (C1) est connecté au premier commutateur à semi-conducteur de puissance bidirectionnel (S1) commandable, **en ce que** le point de connexion des premier et deuxième dispositifs de stockage d'énergie capacitifs (C1, C2) est connecté au point de connexion des deuxième et troisième commutateurs à semi-conducteur de puissance bidirectionnels (S2, S3) commandables et le deuxième accumulateur d'énergie capacitif (C2) est connecté au quatrième commutateur à semi-conducteur de puissance bidirectionnel (S4) commandable, et
**en ce que** la capacité de résonance (C) est connectée au point de connexion des premier et deuxième commutateurs à semi-conducteur de puissance bidirectionnels (S1, S2) commandables et le deuxième point de connexion (B) de l'enroulement primaire (N1) du transformateur (3) est connecté au point de connexion des troisième et quatrième commutateurs à semi-conducteur de puissance bidirectionnels (S3, S4) commandables.

4. Convertisseur continu-continu selon l'une quelconque des revendications 1 à 3, **caractérisé en ce que** la deuxième inductance de résonance (L2) est intégrée au transformateur (3).

5. Convertisseur continu-continu selon l'une quelconque des revendications 1 à 4, **caractérisé en ce que** la première inductance de résonance (L1) est intégrée au transformateur (3).

6. Système, **caractérisé en ce qu'**il est prévu au moins deux convertisseurs continu-continu selon l'une quelconque des revendications 1 à 5,
**caractérisé en ce que** les convertisseurs continu-continu (1) des circuits convertisseurs sont connectés les uns aux autres, côté entrée, en parallèle ou en série.

7. Système selon la revendication 6, **caractérisé en ce que** les redresseurs (4) des circuits convertisseurs sont connectés les uns aux autres, côté sortie, en parallèle ou en série.

8. Procédé de mise en fonctionnement du convertisseur continu-continu selon la revendication 2, dans lequel les premier, deuxième, troisième et quatrième commutateurs à semi-conducteur de puissance bidirectionnels (S1, S2, S3, S4) commandables sont respectivement commandés au moyen d'un signal de commande, dans lequel le signal de commande est généré par une modulation du type modulation d'impulsion en largeur,
**caractérisé en ce que** le signal de commande destiné au premier commutateur à semi-conducteur de puissance bidirectionnel (S1) commandable est en phase par rapport au signal de porteuse de la modulation d'impulsion en largeur,
**en ce que** le signal de commande destiné au deuxième commutateur à semi-conducteur de puissance bidirectionnel (S2) commandable est en opposition de phase par rapport au signal de porteuse de la modulation d'impulsion en largeur,
**en ce que** le taux de modulation du signal de commande du premier commutateur à semi-conducteur de puissance bidirectionnel (S1) commandable et le taux de modulation du signal de commande du deuxième commutateur à semi-conducteur de puissance bidirectionnel (S2) commandable sont respectivement sélectionnés à une valeur de l'ordre de grandeur de 25 % ou de 75 %,
**en ce que** le signal de commande complémentaire destiné au deuxième commutateur à semi-conducteur de puissance bidirectionnel (S2) commandable est sélectionné en tant que signal de commande destiné au troisième commutateur à semi-conducteur de puissance bidirectionnel (S3) commandable, et
**en ce que** le signal de commande complémentaire destiné au deuxième commutateur à semi-conducteur de puissance bidirectionnel (S4) commandable est sélectionné en tant que signal de commande destiné au quatrième commutateur à semi-conducteur de puissance bidirectionnel (S2) commandable.

9. Procédé de mise en fonctionnement du convertisseur continu-continu selon la revendication 3, dans lequel les premier, deuxième, troisième et quatrième commutateurs à semi-conducteur de puissance bidirectionnels (S1, S2, S3, S4) commandables sont respectivement commandés au moyen d'un signal de commande, dans lequel le signal de commande est généré par une modulation du type modulation d'impulsion en largeur,
**caractérisé en ce que** le signal de commande destiné au premier commutateur à semi-conducteur de puissance bidirectionnel (S1) commandable est en phase par rapport au signal de porteuse de la modulation d'impulsion en largeur,
**en ce que** le signal de commande destiné au quatrième commutateur à semi-conducteur de puissance bidirectionnel (S4) commandable est en opposition de phase par rapport au signal de porteuse de la modulation d'impulsion en largeur,
**en ce que** le taux de modulation du signal de commande du premier commutateur à semi-conducteur de puissance bidirectionnel (S1) commandable et le taux de modulation du signal de commande du quatrième commutateur à semi-conducteur de puissance bidirectionnel (S4) commandable est respectivement sélectionné à une valeur de l'ordre de grandeur de 25 % ou de 75 %,
**en ce que** le signal de commande complémentaire destiné au premier commutateur à semi-conducteur de puissance bidirectionnel (S1) commandable est sélectionné en tant que signal de commande destiné au deuxième commutateur à semi-conducteur de puissance bidirectionnel (S2) commandable, et
**en ce que** le signal de commande complémentaire destiné au quatrième commutateur à semi-conducteur de puissance bidirectionnel (S4) commandable est sélectionné en tant que signal de commande destiné au troisième commutateur à semi-conducteur de puissance bidirectionnel (S3) commandable.
